# EUROPÄISCHE PATENTSCHRIFT

(11) **EP 4 175 525 B1**
(45) Veröffentlichungstag und Bekanntmachung des Hinweises auf die Patenterteilung: **25.09.2024**
(21) Anmeldenummer: 21742727.7
(22) Anmeldetag: 23.06.2021
(51) Int. Cl.: A47L 9/28

(54) **VERFAHREN ZUR VERBESSERTEN KANTENREINIGUNG EINER WAND**
METHOD FOR AN IMPROVED EDGE CLEANING OF A WALL
MÉTHODE POUR UN NETTOYAGE AMÉLIORÉ DES BORDS D'UN MUR

(30) Priorität: 03.07.2020 DE 102020208400
(43) Veröffentlichungstag der Anmeldung: 10.05.2023
(73) Patentinhaber: BSH Hausgeräte GmbH, 81739 München (DE)
(72) Erfinder: GEIS, Julius, 97688 Bad Kissingen (DE); HOHMANN, Michael, 97616 Bad Neustadt a.d. Saale (DE); GEBEL, Juri, 97618 Hohenroth (DE); SCHREINER, Dominik, 36043 Fulda (DE)
(86) Internationale Anmeldenummer: PCT/EP2021/067086
(87) Internationale Veröffentlichungsnummer: WO 2022/002709

(56) Entgegenhaltungen:
- EP-A1- 3 058 860
- DE-A1- 102008 014 912
- DE-A1- 102012 100 324
- US-A1- 2018 078 106

## Beschreibung

Die vorliegende Erfindung betrifft ein Verfahren zur verbesserten Kantenreinigung einer Wand mit einer vorstehenden Sockelleiste mittels eines Reinigungsroboters.

Aus der US 2017 / 0 332 853 A1 ist ein Reinigungsroboter mit Rädern sowie einer Antriebseinrichtung und einer Saugeinrichtung bekannt, wobei die Antriebseinrichtung die Räder antreibt. Über die Saugeinrichtung kann staubhaltige Luft angesaugt werden. Darüber hinaus besitzt der Reinigungsroboter eine Sensoreinrichtung an einer Innenseite eines vorderen Stoßfängers, die ein Anstoßen des Reinigungsroboters an ein Hindernis erfasst.

Aus der US 2018 / 0 149 753 A1 ist ein selbstfahrendes Gerät mit einem LIDAR-Sensor bekannt, dessen Größe minimiert ist, indem ein Sender- und Empfängermodul getrennt sind.

Aus der US 2018 / 0 078 106 A1 ist ein Reinigungsroboter bekannt, der über eine Mehrzahl an verschiedenen Sensoren verfügt, mit denen Umgebungsgegebenheiten erfasst werden können.

Generell verfügt heutzutage eine Vielzahl an Reinigungsrobotern neben einer, meist Laser-basierten, Sensorik zur Abstandsmessung als Hauptdatenquelle für eine Navigation und gegebenenfalls eine Kartenerstellung auch über eine gefederte Stoßstange mit schaltenden Anstoßsensoren, kurz auch Bumper genannt. Diese dient dazu, Objekte außerhalb eines Erfassungsbereichs einer Hauptabstandssensorik für den Reinigungsroboter erfassbar zu machen, indem der Reinigungsroboter an die Hindernisse bzw. Objekte anstößt und durch den ausgelösten Anstoßsensor das Objekt als Hindernis erkennt. Diese können zum einen durch die begrenzte laterale Ortsauflösung der Sensorik (Objekt zu klein) und zum anderen durch Unterschreiten einer Messebene (Objekt zu niedrig) außerhalb des Erfassungsbereichs liegen. Letzteres trifft insbesondere auf Sockelleisten entlang von Wänden zu, sofern eine Abstandssensorik in der Front des Reinigungsroboters oder oben auf dem Reinigungsroboter verbaut ist.

In den zuletzt genannten Fällen stößt der Reinigungsroboter oftmals an die Sockelleiste an, da eine Navigationssoftware auf Basis der von der Abstandssensorik gelieferten Werte von einem um die Dicke der Sockelleiste größeren Abstand zur Wand ausgeht. Eine Kantenreinigung ist deshalb mit einem derartigen Reinigungsroboter entlang von derartigen Sockelleisten nicht oder nur unzulänglich möglich.

Die vorliegende Erfindung beschäftigt sich daher mit dem Problem, ein Verfahren zur verbesserten Kantenreinigung einer Wand mit einer vorstehenden Sockelleiste anzugeben und insbesondere die dabei auftretenden Nachteile aus dem Stand der Technik zu überwinden.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Dicke einer Sockelleiste entlang einer Wand zu erfassen und zu berücksichtigen und dadurch eine verbesserte Kantenreinigung entlang einer von einer Wand vorstehenden Sockelleiste zu ermöglichen, obwohl der Reinigungsroboter vorzugsweise ausschließlich über einen Abstandserfasser navigiert wird. Das erfindungsgemäße Verfahren zur verbesserten Kantenreinigung einer Wand mit einer vorstehenden Sockelleiste mittels eines Reinigungsroboters erfolgt dabei wie folgt: Zunächst wird der Reinigungsroboter aktiviert und stößt beispielsweise bei einer ersten Reinigungsfahrt an die Sockelleiste der Wand, woraufhin ein Anstoßsensor des Reinigungsroboters ein erstes Signal erzeugt und ein oberhalb des Anstoßsensors angeordneter Abstandserfasser einen ersten Abstand zur Wand erfasst. Daraufhin fährt der Reinigungsroboter zurück und setzt seine erste Reinigungsfahrt fort, bis er zumindest ein weiteres Mal an die Sockelleiste stößt. Daraufhin erzeugt der Anstoßsensor ein zweites Signal, während der Abstandserfasser gleichzeitig einen zweiten Abstand zur Wand erfasst. Eine Rechnereinrichtung des Reinigungsroboters errechnet dann aus dem ersten und zweiten Signal zwei Raumpunkte sowie eine durch diese beiden Raumpunkte verlaufende erste Gerade. Unter Verwendung der zuvor ermittelten Abstände und der beiden Raumpunkte ermittelt nun die Rechnereinrichtung eine Anfahrgrenze des Reinigungsroboters an die Wand für nachfolgende Reinigungsfahrten. Durch die ermittelte erste Gerade und die zugehörigen Abstände ist es nun möglich, dass die Rechnereinrichtung den Reinigungsroboter bei nachfolgenden Reinigungsfahrten ausschließlich über die Abstandserfasser steuert und nur bis an die Anfahrgrenze fährt und dadurch eine verbesserte Kantenreinigung ermöglicht. Die Abstände zur Wand können dabei von dem Abstandserfasser über einen Abstandssensor gemessen oder aus einer Karte entnommen werden, in welcher zuvor die Abstände für unterschiedliche Raumpunkte hinterlegt wurden. Das erfindungsgemäße Verfahren verwendet somit bei der erstmalig in einem Raum durchgeführten Kantenreinigung ermittelte Koordinaten der Punkte, nämlich der ersten und zweiten Raumpunkte, bei welchen ein Kontakt mit der Sockelleiste aufgetreten ist und gleichzeitig der Abstandserfasser die Abstände zur Wand erfasst hat, deren Werte einen größeren vorhandenen Abstand zur Wand zeigen. Mit dem α-priori-Wissen, dass die Sockelleisten parallel zur Wand angebracht sind, kann aus den beiden Raumpunkten und den zugehörigen ersten und zweiten Abständen die Dicke der Sockelleiste berechnet werden, indem eine Gerade durch die beiden Raumpunkte ermittelt wird und in der Navigationssoftware der Normalabstand der ermittelten Gerade zur hinterlegten Wand berechnet wird. Fährt dabei der Reinigungsroboter gegen eine Wand ohne Sockelleiste, so ist der zur Wand verbleibende Abstand gleich Null, während er bei einem Anstoß gegen eine von der Wand vorstehende Sockelleiste einen Abstand größer als Null erfasst. Mit dem erfindungsgemäßen Verfahren ist es somit möglich, ein Selbstlernen von Anfahrgrenzen des Reinigungsroboters zu ermöglichen, und dies selbst in Räumen mit Wänden mit Sockelleisten, wodurch ein verbessertes Reinigen einer Kante entlang der Sockelleiste und damit insbesondere ein verbessertes Reinigungsergebnis erzielt werden können. Von besonderem Vorteil ist darüber hinaus, dass eine Navigation des Reinigungsroboters nahezu ausschließlich über den Abstandserfasser möglich ist und zugleich ohne zusätzliche Sensorik die Kantenreinigung verbessert werden kann. Hierdurch ergibt sich ein erheblicher Zusatznutzen für einen Benutzer bzw. eine Benutzerin.

Bei einer vorteilhaften Weiterbildung des erfindungsgemäßen Verfahrens setzt der Reinigungsroboter seine erste Reinigungsfahrt fort, bis er erneut an die Sockelleiste stößt, woraufhin der Anstoßsensor ein weiteres Signal erzeugt und die Rechnereinrichtung aus dem weiteren Signal einen zugehörigen weiteren Raumpunkt errechnet. Ebenfalls zugehörig zu diesem weiteren Raumpunkt erfasst der Abstandserfasser beim Anstoßen des Reinigungsroboters an die Sockelleiste einen weiteren Abstand zur Wand, der dem weiteren Raumpunkt zugeordnet ist. Die Rechnereinrichtung berücksichtigt nun den weiteren Raumpunkt zur Adaptierung der aus den ersten und zweiten Raumpunkten errechneten ersten Gerade ausschließlich dann, sofern dieser weitere Raumpunkt einen vordefinierten Abstand zur ersten Gerade unterschreitet. Sie berücksichtigt ihn nicht, sofern dieser weitere Raumpunkt den vordefinierten Abstand zur ersten Gerade aufweist oder überschreitet. Hierdurch ist es möglich, die errechnete erste Gerade stets anzupassen und dadurch eine Messunsicherheit einzelner gemessener Raumpunkte zu relativieren bzw. auszugleichen. Mit dieser vorteilhaften Weiterbildung des erfindungsgemäßen Verfahrens ist es zudem auch möglich, ein zufälliges Anstoßen des Reinigungsroboters an ein Hindernis sowie ein Anstoßen an die Sockelleiste zuverlässig zu unterscheiden und dadurch das zufällige Anstoßen des Reinigungsroboters an ein Hindernis in Bezug auf eine Adaption der ersten Gerade außen vorzulassen. Dies ist insbesondere dann der Fall, sofern der weitere Raumpunkt den vordefinierten Abstand zur ersten Gerade aufweist oder überschreitet. In diesem Fall kann somit mit vergleichsweise hoher Sicherheit darauf geschlossen werden, dass der weitere Raumpunkt nicht zur ersten Gerade gehört, sondern durch ein zufälliges Anstoßen an ein anderes Hindernis bedingt ist. Hierdurch kann auch ein Selbstlerneffekt geschaffen werden, der für einen Nutzer wahrnehmbar ist und zugleich können eventuell vorhandene Bedenken hinsichtlich einer Beschädigung der Sockelleiste durch ein wiederholtes Anstoßen reduziert werden.

Bei einer weiteren vorteilhaften Ausführungsform des erfindungsgemäßen Verfahrens errechnet die Rechnereinrichtung aus den an den zumindest ersten und zweiten Raumpunkten erfassten Abständen zur Wand eine zweite Gerade und verwirft die erste Gerade, sofern eine vordefinierte Winkelabweichung zwischen den beiden Geraden überschritten wird. Üblicherweise müsste nämlich die durch die zumindest ersten und zweiten Raumpunkte gelegte erste Gerade parallel zur Wand verlaufen, das heißt die ersten und zweiten Abstände müssten rein theoretisch zumindest annähernd gleich groß sein, sofern die Dicke der Sockelleiste identisch ist. Die vordefinierte Winkelabweichung müsste somit im idealen Fall Null betragen, so dass die erste und zweite Gerade parallel verlaufen. Tun sie dies nicht, so wird mit dieser vorteilhaften Ausführungsform des erfindungsgemäßen Verfahrens eine vordefinierte Winkelabweichung festgelegt, beispielsweise 0,2 bis 0,5 Grad, welche gegebenenfalls noch durch vorhandene Unebenheiten eines Wandputzes bedingt sein können. Größere Winkelabweichungen hingegen würden darauf hinweisen, dass die erste Gerade fehlerbehaftet ist, so dass diese vorzugsweise neu ermittelt wird.

Bei einer weiteren vorteilhaften Ausführungsform des erfindungsgemäßen Verfahrens entspricht der erste Abstand einer Dicke der Sockelleiste am ersten Raumpunkt. Analog entspricht auch der zweite Abstand einer Dicke der Sockelleiste am zweiten Raumpunkt. Üblicherweise müssten dabei bei gleichdicker Sockelleiste der erste und zweite Abstand gleich groß sein. Auch hierüber ist beispielsweise eine Kontrolle des erfindungsgemäßen Verfahrens möglich, so dass die Rechnereinrichtung bei jedem Anstoß an die Sockelleiste den zugehörigen Raumpunkt und den zugehörigen Abstand zur Wand ermittelt und die einzelnen Abstände untereinander vergleicht, wobei hier lediglich toleranzbehaftete Abweichungen der Abstände, welche beispielsweise auf Fertigungstoleranzen der Sockelleiste hindeuten, toleriert werden können.

Dabei kann der Abstandserfasser einen Abstandssensor zum Messen des Abstandes zur Wand am jeweiligen Raumpunkt aufweisen, wodurch ein permanentes Erfassen der räumlichen Gegebenheiten und ein kontinuierliches Anpassen des Anfahrens an die Sockelleiste bzw. die Anfahrgrenze ermöglicht werden. Alternativ ist auch denkbar, dass für unterschiedliche Raumpunkte individuell zugehörige Abstände zur Wand und damit am jeweiligen Raumpunkt vorhandene Dicken der Sockelleisten in einer Karte voreingegeben werden, beispielsweise über eine App, und der Abstandserfasser beim Anstoßen an die Sockelleiste den zu diesem Raumpunkt eingegeben Abstand verwendet. Mit der Möglichkeit, die Dicke/Stärke der Sockelleisten in der App anzugeben, kann eine Verbesserung des Navigationsverhaltens sowie der Ecken-und Kantenreinigung erzielt werden. Dies ist beispielsweise für jeden Raum separat möglich. Somit ist es möglich, den Abstand zur Sockelleiste des Reinigungsroboters präzise an die Gegebenheiten anzupassen. Dies könnte noch gesteigert werden und einzelne Wände oder sogar einzelne Wandabschnitte könnten geändert bzw. die Dicken der dort angebrachten Sockelleisten separat eingegeben werden. So könnte beispielsweise ein bodentiefer Spiegel in die Karte eingefügt werden und der Reinigungsroboter würde in diesem Bereich anders navigieren. Die Ecken- und Kantenreinigung wird so auch ohne rotierende Seitenbürste verbessert. Weiterhin könnte damit das ständige Anstoßen an stärkere Sockelleisten und damit auch eine Beschädigung derselben verhindert werden und damit der Reinigungsroboter eine smartere Navigation erhalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch
- Fig. 1: einen Reinigungsroboter beim Durchführen eines erfindungsgemäßen Verfahrens zur verbesserten Kantenreinigung einer Wand,
- Fig. 2: einzelne Verfahrensschritte des erfindungsgemäßen Verfahrens,
- Fig. 3: eine Darstellung wie in Fig. 2, jedoch bei einer anderen Anfahrt des Reinigungsroboters auf die Wand.

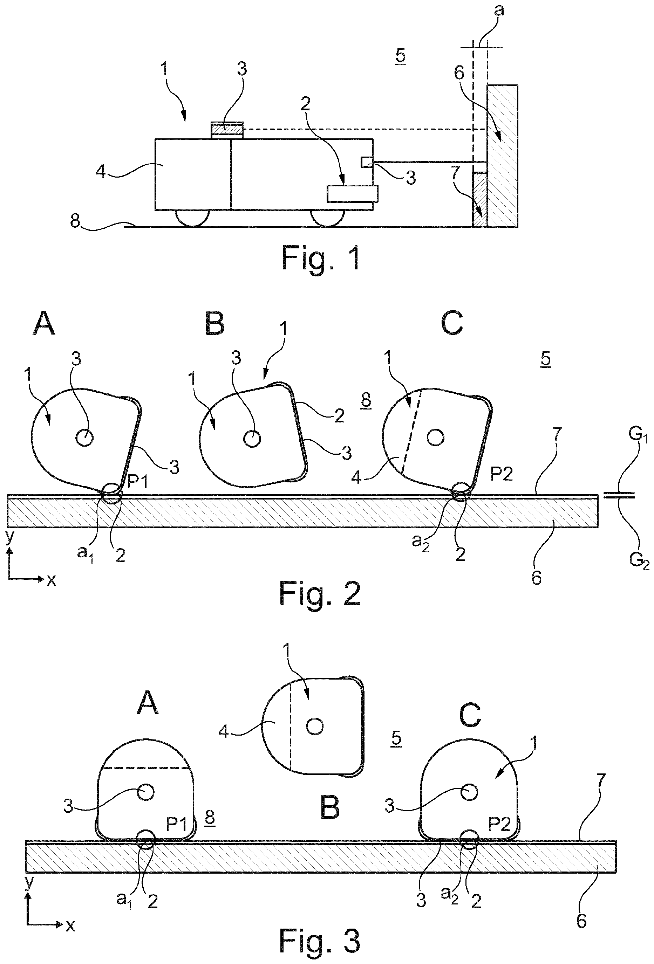

Entsprechend den Figuren 1 bis 3, weist ein Reinigungsroboter 1 zumindest einen Anstoßsensor 2 sowie einen im Betriebszustand, das heißt bei einem üblichen Fahren, darüber angeordneten Abstandserfasser 3 und eine Rechnereinrichtung 4 auf. Der gemäß den Figuren 1 bis 3 gezeigte Reinigungsroboter 1 besitzt dabei zwei Abstandserfasser 3, nämlich einen oben in einem Turm sowie einen frontseitigen Abstandserfasser 3. Gemäß den Figuren 1 bis 3 ist zudem eine einen Raum 5 begrenzende Wand 6 mit einer davor angeordneten Sockelleiste 7 gezeichnet, wobei der Reinigungsroboter 1 einen Boden 8 des Raums 5 reinigt. Um dabei insbesondere auch eine verbesserte Kantenreinigung der Wand 6 mit der von dieser vorstehenden Sockelleiste 7 durchführen zu können, ist das in den nachfolgenden Absätzen beschriebene, erfindungsgemäße Verfahren vorgesehen:
Bei diesem erfindungsgemäßen Verfahren wird der Reinigungsroboter 1 zunächst aktiviert und stößt bei einer ersten Reinigungsfahrt an die Sockelleiste 7 an, woraufhin der Anstoßsensor 2 ein erstes Signal erzeugt und der Abstandserfasser 3 einen ersten Abstand a zur Wand 6 ermittelt. Dies ist gemäß den Figuren 2 und 3 mit dem Verfahrensschritt A bezeichnet. Anschließend setzt der Reinigungsroboter 1 seine erste Reinigungsfahrt fort, bis er zumindest ein weiteres Mal an die Sockelleiste 7 anstößt, was gemäß den Figuren 2 und 3 mit dem Verfahrenszustand C bezeichnet ist. Beim weiteren Anstoßen an die Sockelleiste 7 erzeugt der Anstoßsensor 2 ein zweites Signal und der Abstandserfasser 3 erfasst einen zweiten Abstand a zur Wand 6. Die Rechnereinrichtung 4 des Reinigungsroboters 1 berechnet nun aus dem ersten und zweiten Signal zwei Raumpunkte P₁ und P₂ (vergleiche die Figuren 2 und 3) sowie eine durch diese beiden Raumpunkte P₁ und P₂ verlaufende erste Gerade. Diese erste Gerade verläuft gemäß der Figur 1 an einer Außenseite der Sockelleiste 7. Unter Verwendung der Abstände a an den einzelnen Raumpunkten P₁ und P₂ sowie der beiden Raumpunkte P₁ und P₂ ermittelt nun die Rechnereinrichtung 4 eine Anfahrgrenze des Reinigungsroboters 1 an die Wand 6 für nachfolgende Reinigungsfahrten. Hierbei wird der Abstand a zwischen Reinigungsroboter 1 und Wand 6 um die ermittelte Dicke der Sockelleiste 7 korrigiert, so dass der Reinigungsroboter 1 bei den nachfolgenden Reinigungsfahrten deutlich verbessert entlang der Sockelleiste 7 fahren und dort eine deutlich verbesserte Kantenreinigung durchführen kann.

Mit dem erfindungsgemäßen Verfahren ist es erstmals möglich, den Reinigungsroboter 1 ausschließlich über einen Abstandserfasser 3 zu navigieren und dies selbst bei Wänden 6 mit davor angeordneten Sockelleisten 7, wobei zugleich durch die Berücksichtigung der Dicke der Sockelleiste 7, das heißt des Abstandes a, ein besonders exaktes Anfahren des Reinigungsroboters 1 an die Anfahrgrenze bzw. die Sockelleiste 7 und damit eine deutlich verbesserte Kantenreinigung ermöglicht wird.

Dabei kann der Abstandserfasser 3 einen Abstandssensor zum Messen des Abstandes a zur Wand 6 am jeweiligen Raumpunkt P₁, P₂ bzw. generell an jedem beliebigen Raumpunkt P aufweisen, wodurch ein permanentes Erfassen der räumlichen Gegebenheiten und ein kontinuierliches Anpassen des Anfahrens an die Sockelleiste 7 bzw. die Anfahrgrenze erfolgt. Alternativ ist auch denkbar, dass für unterschiedliche Raumpunkte P individuell zugehörige Abstände a zur Wand 6 und damit am jeweiligen Raumpunkt P vorhandene Dicken der Sockelleisten 7 voreingegeben werden, beispielsweise über eine App, und der Abstandserfasser 3 beim Anstoßen an die Sockelleiste 7 den zu diesem Raumpunkt P eingegeben Abstand a verwendet. Mit der Möglichkeit, die Dicke/Stärke der Sockelleisten 7 in der App anzugeben, kann eine Verbesserung des Navigationsverhaltens sowie der Ecken- und Kantenreinigung erzielt werden. Dies ist beispielsweise für jeden Raum separat möglich. Somit ist es möglich, den Abstand a zur Sockelleiste 7 des Reinigungsroboters 1 präzise an die Gegebenheiten anzupassen. Dies könnte noch gesteigert werden und einzelne Wände 6 oder sogar einzelne Wandabschnitte könnten geändert bzw. die Dicken der dort angebrachten Sockelleisten 7 separat eingegeben werden. So könnte beispielsweise ein bodentiefer Spiegel in die Karte eingefügt werden und der Reinigungsroboter 1 würde in diesem Bereich anders navigieren. Die Ecken- und Kantenreinigung wird auf die bestmögliche Reinigung (ohne rotierende Seitenbürste) gesteigert. Weiterhin könnte damit das ständige Anstoßen an stärkere Sockelleisten und damit auch eine Beschädigung derselben verhindert werden und damit der Reinigungsroboter 1 eine smartere Navigation erhalten.

Bei einer Weiterbildung des erfindungsgemäßen Verfahrens setzt nun der Reinigungsroboter 1 seine erste Reinigungsfahrt fort, bis er erneut an die Sockelleiste 7 stößt, woraufhin der Anstoßsensor 2 ein weiteres Signal erzeugt und der Abstandserfasser 3 einen weiteren Abstand a zur Wand erfasst. Die Rechnereinrichtung 4 berechnet aus dem weiteren Signal einen weiteren Raumpunkt, der zur Adaptierung der aus den ersten und zweiten Raumpunkten P₁ und P₂ errechneten ersten Geraden berücksichtigt wird, sofern der weitere Raumpunkt einen vordefinierten Abstand zur ersten Gerade unterschreitet und der nicht berücksichtigt wird, sofern dieser den vordefinierten Abstand zur ersten Gerade aufweist oder überschreitet. Hierdurch ist es insbesondere möglich, ein zuverlässiges Anstoßen des Reinigungsroboters 1 an ein Hindernis eindeutig von einem Anstoßen an die Sockelleiste 7 zu unterscheiden und das zufällige Anstoßen auszusortieren. Selbstverständlich können hierdurch auch durch eine Regressionsrichtung weitere Messpunkte erfasst und in die Geradenberechnung einbezogen werden, wodurch diese adaptiert bzw. verbessert werden kann.

Die Rechnereinrichtung 4 kann darüber hinaus aus den an zumindest den ersten und zweiten Raumpunkten P₁ und P₂ erfassten Abständen a zur Wand 6 eine zweite Gerade errechnen, und die erste Gerade verwerfen, sofern eine vordefinierte Winkelabweichung zwischen den beiden Geraden überschritten wird.

Gemäß den Figuren 2 und 3 müssten die beiden Geraden G₁ und G₂ parallel verlaufen und dadurch eine Winkelabweichung von 0 Grad besitzen. Durch die Vorgabe der vordefinierten Winkelabweichung, beispielsweise von 0,5 Grad kann dabei die erste Gerade G₁ verworfen werden, sofern die Winkelabweichung zu groß ist und dies auf eine Messungenauigkeit bei der Erstellung der ersten Gerade G₁ hinweist.

Generell ist es bei dem erfindungsgemäßen Verfahren so, dass der Abstand a zwischen dem Reinigungsroboter 1 und der Wand 6, der von den Abstandserfassern 3 erfasst, beispielsweise gemessen oder aus einer Karte mit vorher eingegebenen Werten ausgelesen, wird, der Dicke der Sockelleiste 7 entspricht. Die Abstände a an den jeweiligen Raumpunkten P₁ und P₂ müssten demzufolge üblicherweise identisch sein.

Mit dem erfindungsgemäßen Verfahren und dem Reinigungsroboter 1 ist es erstmals möglich, mit diesem eine rein über einen Abstandserfasser 3 gesteuerte Navigation bei gleichzeitig verbesserter Kantenreinigung bei Wänden 6 mit Sockelleisten 7 zu erreichen. Insbesondere ist keine zusätzliche, aufwändige Sensorik, wie beispielsweise ein LIDAR erforderlich.

### Bezugszeichenliste

- 1: Reinigungsroboter
- 2: Anstoßsensor
- 3: Abstandserfasser
- 4: Rechnereinrichtung
- 5: Raum
- 6: Wand
- 7: Sockelleiste
- 8: Boden

- a: Abstand
- a₁: erster Abstand
- a₂: zweiter Abstand

- G₁: erste Gerade
- G₂: zweite Gerade

- P: Raumpunkt
- P₁: Raumpunkt
- P₂: Raumpunkt

### Bezugszeichenliste

- 1: Reinigungsroboter
- 2: Anstoßsensor
- 3: Abstandserfasser
- 4: Rechnereinrichtung
- 5: Raum
- 6: Wand
- 7: Sockelleiste
- 8: Boden

- a: Abstand
- a₁: erster Abstand
- a₂: zweiter Abstand

- G₁: erste Gerade
- G₂: zweite Gerade

- P: Raumpunkt
- P₁: Raumpunkt
- P₂: Raumpunkt

## Patentansprüche

1. Verfahren zur verbesserten Kantenreinigung einer Wand (6) mit einer vorstehenden Sockelleiste (7) mittels eines Reinigungsroboters (1), der zumindest einen Anstoßsensor (2) sowie zumindest einen im Betriebszustand darüber angeordneten Abstandserfasser (3) aufweist, bei dem
- der Reinigungsroboter (1) bei einer ersten Reinigungsfahrt an die Sockelleiste (7) stößt, woraufhin der Anstoßsensor (2) ein erstes Signal erzeugt und der Abstandserfasser (3) einen ersten Abstand (a₁) zur Wand (6) erfasst,
- der Reinigungsroboter (1) seine erste Reinigungsfahrt fortsetzt bis er zumindest ein weiteres Mal an die Sockelleiste (7) stößt, woraufhin der Anstoßsensor (2) ein zweites Signal erzeugt und der Abstandserfasser (3) einen zweiten Abstand (a₂) zur Wand (6) erfasst,
- eine Rechnereinrichtung (4) des Reinigungsroboters (1) aus dem ersten und zweiten Signal zwei Raumpunkte (P₁, P₂) sowie eine durch diese beiden Raumpunkte (P₁, P₂) verlaufende erste Gerade (G₁) errechnet,
- die Rechnereinrichtung (4) unter Verwendung der Abstände (a₁, a₂) und der beiden Raumpunkte (P₁, P₂) eine Anfahrgrenze des Reinigungsroboters (1) an die Wand (6) für nachfolgende Reinigungsfahrten ermittelt,
- die Rechnereinrichtung (4) den Reinigungsroboter (1) bei nachfolgenden Reinigungsfahrten ausschließlich über den zumindest einen Abstandserfasser (3) steuert und nur bis an die Anfahrgrenze fährt und dadurch eine verbesserte Kantenreinigung ermöglicht.

2. Verfahren nach Anspruch 1, **dadurch gekennzeichnet, dass**
- der Reinigungsroboter (1) seine erste Reinigungsfahrt fortsetzt, bis er erneut an die Sockelleiste (7) stößt, woraufhin der Anstoßsensor (2) ein weiteres Signal erzeugt und der Abstandserfasser (3) einen weiteren Abstand zur Wand (6) erfasst,
- die Rechnereinrichtung (4) aus dem weiteren Signal einen weiteren Raumpunkt errechnet,
- die Rechnereinrichtung (4) den weiteren Raumpunkt zur Adaptierung der aus den ersten und zweiten Raumpunkten (P₁, P₂) errechneten ersten Gerade (G₁) berücksichtigt, sofern dieser einen vordefinierten Abstand zur ersten Geraden (G₁) unterschreitet und nicht berücksichtigt, sofern dieser den vordefinierten Abstand zur ersten Geraden (G₁) aufweist oder überschreitet.

3. Verfahren nach Anspruch 1 oder 2, **dadurch gekennzeichnet, dass** die Rechnereinrichtung (4) aus den an zumindest dem ersten und dem zweiten Raumpunkten (P₁, P₂) erfassten Abständen (a₁, a₂) zur Wand (6) eine zweite Gerade (G₂) errechnet und die erste Gerade (G₁) verwirft, sofern eine vordefinierte Winkelabweichung zwischen den beiden Geraden (G₁, G₂) überschritten wird.

4. Verfahren nach einem der vorhergehenden Ansprüche, **dadurch gekennzeichnet, dass** der erste Abstand (a₁) einer Dicke der Sockelleiste (7) am ersten Raumpunkt (P₁) entspricht.

5. Verfahren nach einem der vorhergehenden Ansprüche, **dadurch gekennzeichnet, dass** der zweite Abstand (a₂) einer Dicke der Sockelleiste (7) am zweiten Raumpunkt (P₂) entspricht.

6. Verfahren nach einem der vorhergehenden Ansprüche, **dadurch gekennzeichnet, dass** der Abstandserfasser (3) einen Abstandssensor zum Messen des Abstandes (a) zur Wand (6) am jeweiligen Raumpunkt (P) aufweist, oder dass für unterschiedliche Raumpunkte (P) individuell zugehörige Abstände (a) zur Wand (6) und damit Dicken der Sockelleisten (7) voreingegeben werden und der Abstandserfasser (3) beim Anstoßen an die Sockelleiste (7) den zu diesem Raumpunkt (P) eingegebenen Abstand (a) verwendet.

## Claims

1. Method for the improved cleaning of edges of a wall (6), which has a projecting skirting board (7), by means of a cleaning robot (1) which has at least one impact sensor (2) and at least one distance detector (3) which is arranged thereabove in the operating state, in which
- in a first cleaning pass, the cleaning robot (1) strikes against the skirting board (7), whereupon the impact sensor (2) generates a first signal and the distance detector (3) detects a first distance (a₁) from the wall (6),
- the cleaning robot (1) continues its first cleaning pass until it strikes against the skirting board (7) at least once more, whereupon the impact sensor (2) generates a second signal and the distance detector (3) detects a second distance (a₂) from the wall (6),
- a computer facility (4) of the cleaning robot (1) calculates from the first and second signal two spatial points (P₁, P₂) and a first straight line (G₁) which runs through these two spatial points (P₁, P₂),
- by using the distances (a₁, a₂) and the two spatial points (P₁, P₂), the computer facility (4) determines an approach boundary of the cleaning robot (1) in relation to the wall (6) for subsequent cleaning passes,
- the computer facility (4) controls the cleaning robot (1) during subsequent cleaning passes exclusively via the at least one distance detector (3), the cleaning robot only traveling as far as the approach boundary and thereby permitting an improved cleaning of edges.

2. Method according to claim 1, **characterised in that**
- the cleaning robot (1) continues its first cleaning pass until it strikes once again against the skirting board (7), whereupon the impact sensor (2) generates a further signal and the distance detector (3) detects a further distance from the wall (6),
- the computer facility (4) calculates a further spatial point from the further signal,
- the computer facility (4) considers the further spatial point, for adapting the first straight line (G₁) calculated from the first and second spatial points (P₁, P₂), if this further spatial point falls below a predefined distance from the first straight line (G₁), and the computer facility does not consider the further spatial point if this further spatial point is at or exceeds the predefined distance from the first straight line (G₁).

3. Method according to claim 1 or 2, **characterised in that** the computer facility (4) calculates a second straight line (G₂) from the distances (a₁, a₂) from the wall (6) detected at least at the first and the second spatial points (P₁, P₂) and discards the first straight line (G₁) if a predefined angular deviation between the two straight lines (G₁, G₂) is exceeded.

4. Method according to one of the preceding claims, **characterised in that** the first distance (a₁) corresponds to a thickness of the skirting board (7) at the first spatial point (P₁).

5. Method according to one of the preceding claims, **characterised in that** the second distance (a₂) corresponds to a thickness of the skirting board (7) at the second spatial point (P₂).

6. Method according to one of the preceding claims, **characterised in that** the distance detector (3) has a distance sensor for measuring the distance (a) from the wall (6) at the respective spatial point (P) or **in that**, for different spatial points (P), individually associated distances (a) from the wall (6) and thus thicknesses of the skirting boards (7) are input in advance and with an impact against the skirting board (7) the distance detector (3) uses the distance (a) input for this spatial point (P).

## Revendications

1. Procédé pour un nettoyage amélioré des bords d'un mur (6) avec une plinthe en saillie (7) au moyen d'un robot de nettoyage (1), lequel présente au moins un capteur de choc (2) ainsi qu'au moins un détecteur de distance (3) disposé par-dessus dans l'état de fonctionnement, dans lequel
- le robot de nettoyage (1) bute contre la plinthe (7) lors d'un premier trajet de nettoyage, suite à quoi le capteur de choc (2) génère un premier signal et le détecteur de distance (3) détecte une première distance (a₁) par rapport au mur (6),
- le robot de nettoyage (1) poursuit son premier trajet de nettoyage jusqu'à ce qu'il bute au moins une nouvelle fois contre la plinthe (7), suite à quoi le capteur de choc (2) génère un deuxième signal et le détecteur de distance (3) détecte une deuxième distance (a₂) par rapport au mur (6),
- un dispositif de calcul (4) du robot de nettoyage (1) calcule au départ du premier et du deuxième signal deux points spatiaux (P₁, P₂) ainsi qu'une première droite (G₁) passant pas ces deux points spatiaux (P₁, P₂),
- le dispositif de calcul (4) détermine en utilisant les distances (a₁, a₂) et les deux points spatiaux (P₁, P₂) une limite d'avancée du robot de nettoyage (1) sur le mur (6) pour les trajets de nettoyage suivants,
- le dispositif de calcul (4) commande le robot de nettoyage (1) exclusivement via l'au moins un détecteur de distance (3) lors des trajets de nettoyage suivants et se déplace uniquement jusqu'à la limite d'avancée, permettant ainsi un nettoyage amélioré des bords.

2. Procédé selon la revendication 1, **caractérisé en ce que**
- le robot de nettoyage (1) poursuit son premier trajet de nettoyage jusqu'à ce qu'il bute à nouveau contre la plinthe (7), suite à quoi le capteur de choc (2) génère un signal supplémentaire et le détecteur de distance (3) détecte une distance supplémentaire par rapport au mur (6),
- le dispositif de calcul (4) calcule au départ du signal supplémentaire un point spatial supplémentaire,
- le dispositif de calcul (4) tient compte du point spatial supplémentaire pour l'adaptation de la première droite (G₁) calculée au départ des premier et deuxième points spatiaux (P₁, P₂), dans la mesure où celui-ci est inférieur à une distance prédéfinie par rapport à la première droite (G₁) et n'en tient pas compte dans la mesure où celui-ci présente la distance prédéfinie par rapport à la première droite (G₁) ou l'excède.

3. Procédé selon la revendication 1 ou 2, **caractérisé en ce que** le dispositif de calcul (4) calcule au départ des distances (a₁, a₂) détectées par rapport au mur (6) au moins aux premier et deuxième points spatiaux (P₁, P₂) une deuxième droite (G₂) et rejette la première droite (G₁) dans la mesure où une déviation angulaire prédéfinie entre les deux droites (G₁, G₂) est dépassée.

4. Procédé selon l'une des revendications précédentes, **caractérisé en ce que** la première distance (a₁) correspond à une épaisseur de la plinthe (7) au premier point spatial (P₁).

5. Procédé selon l'une des revendications précédentes, **caractérisé en ce que** la deuxième distance (a₂) correspond à une épaisseur de la plinthe (7) au deuxième point spatial (P₂).

6. Procédé selon l'une des revendications précédentes, **caractérisé en ce que** le détecteur de distance (3) présente un capteur de distance pour la mesure de la distance (a) par rapport au mur (6) au point spatial respectif (P) ou **en ce que** pour différents points spatiaux (P) des distances individuelles correspondantes (a) par rapport au mur (6) et, ce faisant, des épaisseurs des plinthes (7) sont pré-introduites et le détecteur de distance (3) utilise, lors du choc contre la plinthe (7), la distance (a) introduite par rapport à ce point spatial (P).
